(19) Europäisches Patentamt / European Patent Office / Office européen des brevets

(11) **EP 4 430 568 B1**

(12) **FASCICULE DE BREVET EUROPEEN**

(45) Date de publication et mention de la délivrance du brevet:
**22.04.2026 Bulletin 2026/17**

(21) Numéro de dépôt: **22813300.5**

(22) Date de dépôt: **08.11.2022**

(51) Classification Internationale des Brevets (IPC):
***G06T 7/70*** *(2017.01)*

(52) Classification Coopérative des Brevets (CPC):
**G06T 7/70;** G06T 2207/10016; G06T 2207/30252

(86) Numéro de dépôt international:
**PCT/EP2022/081053**

(87) Numéro de publication internationale:
**WO 2023/083774 (19.05.2023 Gazette 2023/20)**

(54) **PROCÉDÉ D'ESTIMATION DYNAMIQUE DU TANGAGE ET DU ROULIS D'UN VÉHICULE AUTOMOBILE AU MOYEN D'AU MOINS UN CAPTEUR D'ACQUISITION D'IMAGES**

VERFAHREN ZUR DYNAMISCHEN SCHÄTZUNG DER NICK- UND ROLLBEWEGUNG EINES KRAFTFAHRZEUGS MITTELS MINDESTENS EINES BILDERFASSUNGSSENSORS

METHOD FOR DYNAMICALLY ESTIMATING THE PITCH AND THE ROLL OF A MOTOR VEHICLE BY MEANS OF AT LEAST ONE IMAGE CAPTURE SENSOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **09.11.2021 FR 2111847**

(43) Date de publication de la demande:
**18.09.2024 Bulletin 2024/38**

(73) Titulaire: **AUMOVIO Autonomous Mobility Germany GmbH**
**85057 Ingolstadt (DE)**

(72) Inventeurs:
• CHOCHOY, Hugo
  31100 Toulouse (FR)
• FERRET, Gatien
  31100 Toulouse (FR)
• BERGER, Matthieu
  31100 Toulouse (FR)

(74) Mandataire: **Aumovio Corporation**
**AUMOVIO Germany GmbH**
**Taunusstraße 36**
**80807 München (DE)**

(56) Documents cités:
**EP-B1- 3 579 191     US-B1- 6 292 759**
**US-B2- 6 678 631**

## Description

### [Domaine technique]

La présente demande de brevet se rapporte au domaine des systèmes d'aide à la conduite par un capteur d'acquisition d'images du type caméra vidéo, et plus particulièrement à l'optimisation de l'acquisition d'informations relatives à l'environnement d'un véhicule automobile par un procédé d'estimation dynamique du tangage et du roulis d'un véhicule automobile au moyen d'au moins un capteur d'acquisition d'images qui est embarqué sur le véhicule.

### [Etat de la technique antérieure]

Les systèmes d'aide à la conduite automobile, connu sous l'acronyme ADAS, de l'anglais « Advanced Driver Assistance Systems », sont de plus en plus répandus dans les véhicules automobiles. Ils offrent un nombre croissant de fonctionnalités avec pour objectif d'améliorer le confort et la sécurité des utilisateurs de véhicules. A terme, il est envisageable de produire des véhicules à conduite autonome.

Nombre de fonctionnalités offertes par de tels systèmes s'appuient sur une analyse en temps réel de l'environnement immédiat du véhicule dans lequel ils sont embarqués. Qu'il s'agisse, par exemple, d'aider au freinage d'urgence ou d'améliorer le contrôle de trajectoire d'une voiture, la prise en compte à chaque instant de caractéristiques de l'environnement du véhicule est nécessaire pour assurer les fonctionnalités des systèmes d'aide à la conduite.

Dans ce contexte, une des possibilités pour l'acquisition d'informations relatives à l'environnement immédiat d'un véhicule automobile est d'utiliser des moyens d'acquisition et d'analyse d'images. Un véhicule peut ainsi être équipé d'une ou plusieurs caméras vidéo destinées à observer son environnement, à chaque instant, dans une ou plusieurs directions d'observation. Les images recueillies par les caméras sont alors traitées par le système d'aide à la conduite et celui-ci peut les utiliser pour potentiellement déclencher une action d'aide à la conduite, par exemple déclencher une alerte sonore et/ou visuelle, voire déclencher un freinage ou un changement de trajectoire du véhicule automobile.

Ce type de fonctionnement suppose que les images recueillies par la ou les caméras permettent de déduire d'une manière fiable les informations pertinentes souhaitées sur l'environnement du véhicule, et avec un coût de calcul aussi réduit que possible. Cela implique notamment que les images acquises soient effectivement représentatives de la réalité observée et sans dégradations susceptibles de fausser la perception de l'environnement par le système d'aide à la conduite. Cela implique aussi, pour certaines fonctionnalités, qu'il soit possible pour le système d'aide à la conduite, à partir des images acquises par la caméra, de localiser correctement les divers objets présents dans l'espace tridimensionnel dans lequel le véhicule évolue.

C'est le cas, par exemple, dans la situation classique où le système d'aide à la conduite exploite les images acquises par une caméra montée sur le pare-brise avant d'un véhicule, au niveau de son rétroviseur central. Cette exploitation présuppose en effet, pour certaines fonctionnalités, de connaître la relation entre les coordonnées spatiales d'un point de l'espace avec le point correspondant dans l'image acquise par la caméra qui suppose donc de connaître la relation spatiale unissant la caméra et le véhicule. Pour s'assurer de la bonne connaissance de ces relations, il est connu de procéder, plus ou moins régulièrement, à un calibrage de la caméra. Ce calibrage a pour but de déterminer des paramètres, dits paramètres intrinsèques et paramètres extrinsèques, de la caméra.

Les paramètres intrinsèques sont liés aux caractéristiques techniques propres de la caméra, comme par exemple, sa focale, la position de son centre optique ou son modèle de distorsion. Leur calibrage permet d'estimer ces paramètres et il est donc réalisé en usine en fin de chaîne de production de la caméra.

Les paramètres extrinsèques correspondent, quant à eux, au positionnement et à l'orientation de la caméra par rapport à un repère monde et supposé, sous réserve d'une éventuelle inclinaison du véhicule par rapport à la route sur laquelle le véhicule circule, parallèle à ladite route. Ces paramètres comprennent les trois translations et les trois rotations nécessaires pour passer des coordonnées d'un point, exprimées dans un repère défini ci-dessus et appelé « repère monde », aux coordonnées de ce point exprimées dans un repère lié à la caméra appelé « repère caméra ». Le calibrage de ces paramètres (six au total) permet alors d'estimer le positionnement et l'orientation de la caméra par rapport à la route. De plus, s'agissant de paramètres amenés à varier plus fréquemment que les paramètres intrinsèques, par exemple en cas d'un changement de charge de charge du véhicule, le calibrage des paramètres extrinsèques peut être opéré relativement régulièrement afin d'ajuster en permanence leurs valeurs à la situation constatée.

La notion de « calibrage » porte souvent sur une variable qui varie peu et qui détermine un angle « absolu » entre la caméra et le repère monde. C'est une moyenne, ou une valeur « nominale », qui ne prend pas en compte les oscillations de la caméra. On distingue le calibrage en fin de chaîne de production du véhicule, qui utilise une mire de production, et le calibrage dit « en ligne » qui s'appuie sur le flux optique de la caméra.

Finalement, le calibrage de la caméra a pour objectif de faciliter l'exploitation des images acquises par la caméra afin d'améliorer la localisation dans l'espace des divers objets observés.

Malgré cela, quelle que soit la régularité avec laquelle le calibrage peut être opéré, il ne permet pas de suivre le tangage et le roulis dynamique qui engendrent des changements d'orientation dynamiques importants de la caméra.

On entend par tangage de la caméra, un mouvement angulaire de la caméra autour d'un axe transversal perpendiculaire à la trajectoire longitudinale du véhicule automobile, et on entend par roulis un mouvement angulaire de la caméra autour d'un axe longitudinal parallèle à la trajectoire longitudinale du véhicule automobile, leur valeur est estimée à l'aide du flux optique de la caméra.

La notion de tangage et de roulis dynamique représente la même grandeur physique que le calibrage, c'est-à-dire l'angle de la caméra par rapport à un repère, généralement le repère « monde ».

Cependant, le tangage et le roulis dynamique ne représentent pas une moyenne ou des valeurs nominales mais une valeur instantanée qui oscille autour de la valeur de calibrage.

Typiquement, dans des situations telles que le franchissement d'un dos d'âne, une accélération ou une décélération importante, ou un changement de pente soudain, la valeur du tangage instantané peut temporairement s'écarter, de façon significative, de sa valeur calibrée. De même, lorsque le véhicule roule sur un coussin berlinois ou un nid de poule de manière « asymétrique », autrement dit lorsque seules les roues se trouvant d'un côté du véhicule franchissent le coussin berlinois ou le nid de poule, ou dans le cas d'un fort virage, la valeur du roulis instantané peut temporairement s'écarter, de façon significative, de sa valeur calibrée.

Or la bonne connaissance de l'angle correspondant au tangage et de l'angle correspondant au roulis, a un impact déterminant sur la localisation dans l'espace des objets observés par la caméra d'un véhicule automobile. Dès lors, sa mauvaise appréciation, même temporaire, est susceptible d'affecter la bonne détermination de la position des objets environnant le véhicule et donc de limiter voire de bloquer certaines fonctionnalités du système d'aide à la conduite qui reposent sur cette détermination.

Pour estimer le tangage instantané, que l'on désignera simplement par tangage dans la suite, et le roulis instantané que l'on désignera simplement par roulis dans la suite, d'une caméra embarquée dans un véhicule de façon dynamique, c'est-à-dire de manière à apprécier les variations rapides liées à des changements ponctuels d'environnement de conduite, on connaît déjà l'utilisation de la méthode de cartographie et localisation simultanées ou SLAM de l'anglais « Simultaneous Localization And Mapping ».

Cette méthode consiste, en premier lieu, à construire simultanément la cartographie d'un lieu et à s'y localiser. Elle peut par ailleurs permettre d'estimer le tangage et le roulis de la caméra en s'appuyant notamment sur le suivi, dans l'image, de certains objets remarquables et de leur déplacement d'une image à l'autre. Elle est toutefois largement sujette au bruit de détection et est relativement limitée en terme de réactivité à laquelle la valeur du tangage et la valeur du roulis peuvent être effectivement actualisées dès lors qu'une estimation robuste est l'objectif visé.

Par ailleurs, une autre méthode connue consiste à traiter les images acquises par la caméra embarquée d'un véhicule pour y reconnaître, dans chaque image, la position des lignes de marquage de la route sur laquelle le véhicule circule, et, pour en déduire, en temps réel, un ou des angles d'inclinaison de la caméra. Cette méthode peut permettre d'estimer dynamiquement le tangage mais suppose de circuler sur une route ayant des lignes marquées parallèles et reconnaissables.

De plus, dans le cas des deux méthodes évoquées jusqu'ici, l'estimation de la valeur de tangage et de la valeur de roulis n'est performante que dans des cas où celles-ci restent suffisamment proches de valeurs attendues. Autrement dit, dès que l'amplitude de la variation du tangage est très grande, comme c'est le cas par exemple pour le franchissement d'un dos d'âne ou pour une forte accélération, ou que l'amplitude de la variation du roulis est très grande, comme c'est le cas par exemple pour le franchissement d'un coussin berlinois pour d'un nid de poule, les deux méthodes mentionnées précédemment peuvent ne pas réussir à suivre les changements d'angle de la caméra.

Pour pallier les inconvénients des deux méthodes évoquées, on connaît un procédé d'estimation dynamique du tangage et du roulis d'un véhicule automobile qui est décrit et représenté dans le document EP3579191B1.

Le procédé décrit dans le document EP3579191B1 comporte une première étape de calcul d'un angle d'inclinaison extrinsèque d'une caméra estimé par intégration du mouvement relatif de la caméra à un instant t courant, et une seconde étape d'estimation d'un angle d'inclinaison extrinsèque de la caméra avec correction de divergence.

On entend par « angle d'inclinaison » aussi bien un angle de tangage qu'un angle de roulis, c'est à dire l'angle entre le repère caméra et le repère monde.

La première étape de calcul détermine l'angle d'inclinaison par l'équation suivante : $\theta_{int}(t) = \theta(t-1) - \theta_{rel}(t)$ avec $\theta(t-1)$ l'angle d'inclinaison extrinsèque absolu de la caméra à un instant précédent t-1, et $\theta_{rel}(t)$ l'angle d'inclinaison relatif de la caméra à l'instant t courant qui exprime l'angle d'inclinaison du capteur entre ledit instant précédent t-1 et l'instant t courant.

La seconde étape estime l'angle d'inclinaison de la caméra par l'équation suivante :
$\theta(t) = \theta_{int}(t) + DAC(t) * (\theta_{calib}(t) - \theta_{int}(t))$ avec $\theta(t)$ l'angle d'inclinaison extrinsèque absolu de la caméra, à l'instant t courant, $\theta_{int}(t)$ l'angle d'inclinaison extrinsèque de la caméra estimé par intégration du mouvement relatif de la caméra au cours de la première étape de calcul précédente, à l'instant t courant, $DAC(t)$ un coefficient d'anti-divergence compris entre zéro et un, à l'instant t courant, et $\theta_{calib}(t)$ l'angle d'inclinaison extrinsèque de calibrage à l'instant t courant, qui est connu à chaque instant et qui correspond à la valeur nominale de l'angle d'inclinaison de la caméra en l'absence de dynamique du véhicule automobile.

Le coefficient d'anti-divergence est aussi connu sous la dénomination anglaise « Drift Avoiding Coefficient » pour l'acronyme DAC.

Avantageusement, le procédé décrit dans le document EP3579191B1 prend en compte le mouvement de la caméra et la multitude des scénarios de la route sans pour autant diverger, par l'emploi du coefficient d'anti-divergence.

Toutefois, le coefficient d'anti-divergence ne dépend que du mouvement de la caméra, de sorte que lorsque le mouvement inter-image est élevé, le coefficient d'anti-divergence tend vers zéro et l'estimé de l'angle d'inclinaison $\theta(t)$ se rapproche de l'angle d'inclinaison extrinsèque de la caméra estimé par intégration du mouvement relatif de la caméra $\theta_{int}(t)$.

A l'inverse, lorsque le mouvement inter-image est faible, le coefficient d'anti-divergence tend vers sa valeur maximale et l'estimé de l'angle d'inclinaison $\theta(t)$ se rapproche de sa valeur de référence $\theta_{calib}(t)$.

Or, on constate que le véhicule automobile peut présenter une inclinaison prolongée dans certaines conditions.

Par exemple, dans le cas d'un véhicule automobile du type camion équipé d'une cabine suspendue, la cabine peut rester inclinée suivant un angle constant pendant plusieurs secondes, dû à la force d'inertie subie par la cabine.

Ainsi, dans le cas d'un freinage d'urgence ou dans le cas d'un long virage, la cabine du véhicule automobile et la caméra montée sur la cabine peuvent conserver un angle de tangage et un angle de roulis respectivement, pendant plusieurs secondes.

Par conséquent, dans certaines conditions, le procédé décrit dans le document EP3579191B1 ne permet pas d'estimer les angles de roulis et de tangage de manière fiable, ce qui peut engendrer une perte de l'objet suivi ou un estimé de distance avec l'objet suivi erroné.

Le brevet US6292759 B1 (SCHIFFMANN JAN KONRIED [US]) (2001-09-18) divulgue un estimateur de l'angle d'attitude d'un véhicule qui minimise les erreurs pouvant être présentes dans les capteurs de qualité automobile. L'estimateur d'angle d'attitude utilise un capteur de vitesse angulaire d'attitude pour détecter la vitesse angulaire d'attitude, ainsi qu'un accéléromètre pour détecter l'accélération latérale ou longitudinale du véhicule. Un contrôleur détermine une estimation de l'angle d'attitude et met à jour cette estimation en fonction de la vitesse angulaire d'attitude. Le contrôleur fournit en outre un coefficient de mélange et met à jour l'estimation de l'angle d'attitude afin de générer une estimation de l'angle d'attitude actuel du véhicule en fonction de l'angle d'attitude basé sur l'accélération et du coefficient de mélange, et produit un signal d'estimation de l'angle du véhicule, tel qu'une estimation de l'angle de roulis et/ou une estimation de l'angle de tangage.

Le brevet US6678631 B2 (DELPHI TECH INC [US]) (2004-01-13) divulgue un estimateur d'angle d'attitude (par exemple, le roulis). L'estimateur d'angle d'attitude utilise un capteur de vitesse angulaire d'attitude pour détecter la vitesse angulaire d'attitude d'un véhicule, un premier accéléromètre pour détecter l'accélération verticale du véhicule, et un deuxième accéléromètre pour détecter l'accélération horizontale (par exemple latérale) du véhicule. Un contrôleur détermine un angle d'attitude basé sur l'accélération en fonction des accélérations verticale et horizontale détectées, et détermine en outre une estimation de l'angle d'attitude en fonction du taux d'attitude angulaire et de l'angle d'attitude basé sur l'accélération.

**[Exposé de l'invention]**

La présente invention a notamment pour but de résoudre les inconvénients de l'art antérieur précités.

On atteint cet objectif, ainsi que d'autres qui apparaîtront à la lecture de la description qui suit, avec un procédé d'estimation dynamique du tangage et du roulis d'un véhicule automobile selon la revendication 1.

Suivant d'autres caractéristiques optionnelles du procédé selon invention, prises seules ou en combinaison :

- le coefficient d'anti-divergence $DAC(t)$ dépend en partie du mouvement du capteur entre l'instant courant t et un instant précédent ;
- la seconde étape d'estimation comprend le calcul du coefficient d'anti-divergence $DAC(t)$ par l'équation suivante :

$$DAC(t) = min\left(DAC_{rel}(t), DAC_{\vec{a}}(t)\right)$$

avec :

- $DAC_{rel}(t)$ un coefficient d'anti-divergence relatif qui dépend du mouvement du capteur et qui est obtenu par l'équation suivante :

$$DAC_{rel}(t) = DAC_{maxrel} * \left(1 - min\left(\int_{t-Nrel}^{t} \frac{|\theta_{rel}(x)|}{\theta_{AMR}} dx, 1\right)\right)$$

**avec** $DAC_{maxrel}$ une valeur maximale prédéterminée du coefficient d'anti-divergence relatif $DAC_{rel}(t)$, $Nrel$ un nombre prédéterminé correspondant à la valeur choisie du nombre d'instants précédents utilisés pour la détermination du coefficient d'anti-divergence relatif $DAC_{rel}(t)$ , $\theta_{rel}(t)$ l'angle d'inclinaison relatif du capteur à l'instant t courant, $\theta AMR$ une valeur maximale empirique prédéterminée de l'angle d'inclinaison relatif du capteur à l'instant t courant $\theta_{rel}(t)$,

- $DAC_{\vec{a}}(t)$ un coefficient d'anti-divergence d'accélération qui dépend de l'accélération subie par le capteur, et qui est obtenu par l'équation suivante :

$$DAC_{\vec{a}}(t) = DAC_{max\vec{a}} * \left( 1 - min\left( \int_{t-Na}^{t} \frac{|\vec{a}(x)|}{\vec{a}AMR} dx, 1 \right) \right)$$

**avec** $DAC_{max\vec{a}}$ une valeur maximale prédéterminée du coefficient d'anti-divergence d'accélération $DAC_{\vec{a}}(t)$, $Na$ le nombre prédéterminé correspondant à la valeur choisie du nombre d'instants précédents utilisés pour la détermination du coefficient d'anti-divergence d'accélération $DAC_{\vec{a}}(t)$, $\vec{a}(t)$ l'accélération du capteur d'acquisition d'images à l'instant t, $\vec{a}AMR$ une valeur maximale empirique prédéterminée de l'accélération $\vec{a}(t)$ du capteur d'acquisition d'images ;

- l'angle d'inclinaison extrinsèque absolu $\theta(t)$ du capteur est un angle de roulis qui correspond à un mouvement d'oscillation angulaire du capteur autour d'un axe longitudinal globalement parallèle à la trajectoire longitudinale du véhicule automobile ;

- l'accélération $\vec{a}(t)$ du capteur d'acquisition d'images est une accélération centrifuge transversale suivant une direction globalement perpendiculaire à la trajectoire du véhicule automobile ;

- l'angle d'inclinaison extrinsèque absolu $\theta(t)$ du capteur est un angle de tangage qui correspond à un mouvement d'oscillation angulaire du capteur autour d'un axe transversal globalement perpendiculaire à la trajectoire longitudinale du véhicule automobile ;

- l'accélération $\vec{a}(t)$ du capteur d'acquisition d'images est une accélération longitudinale suivant la trajectoire longitudinale du véhicule automobile ;

- le véhicule automobile est équipé d'une cabine de conduite qui est montée oscillante en roulis et en tangage par rapport au châssis dudit véhicule et qui porte le capteur d'acquisition d'images.

La présente invention se rapporte également à un dispositif d'estimation dynamique du tangage et du roulis d'un véhicule automobile au moyen d'au moins un capteur d'acquisition d'images qui est embarqué sur ledit véhicule, prévu pour mettre en oeuvre le procédé décrit précédemment, le dispositif comportant au moins un capteur d'acquisition d'images qui est monté sur ledit véhicule et une unité de traitement pour déterminer l'angle d'inclinaison extrinsèque absolu $\theta(t)$ du capteur.

**[Description des dessins]**

D'autres caractéristiques et avantages de l'invention ressortiront à la lecture de la description qui suit, en référence aux figures annexées, qui illustrent :

[Fig. 1] : une vue schématique d'un véhicule automobile équipé d'une cabine suspendue et d'une caméra vidéo qui ne présente pas d'angle d'inclinaison dynamique ;

[Fig. 2] : une vue schématique du véhicule automobile de la figure 1 en position de freinage dans laquelle la caméra présente un angle de tangage ;

[Fig. 3] : un exemple d'évolution de l'orientation de la caméra relatif à l'angle de tangage ;

[Fig. 4] : une vue schématique du véhicule automobile de la figure 1 en position de dévers dans laquelle la caméra présente un angle de roulis à un instant t-1 ;

[Fig. 5] : une vue schématique similaire à celle de la figure 4 dans laquelle la caméra présente un angle de roulis à un instant t courant ;

[Fig. 6] : un exemple d'évolution de l'orientation de la caméra relatif à l'angle de roulis.

Dans les pièces de la présente demande de brevet, on adoptera à titre non limitatif la terminologie longitudinal, vertical et transversal en référence au trièdre L, V, T indiqué aux figures, en considérant que le véhicule automobile s'étend longitudinalement et se déplace longitudinalement vers l'avant.

Sur l'ensemble de ces figures, les éléments identiques ou similaires sont repérés par des signes de référence identiques ou similaires sur l'ensemble des figures.

## [Description des modes de réalisation]

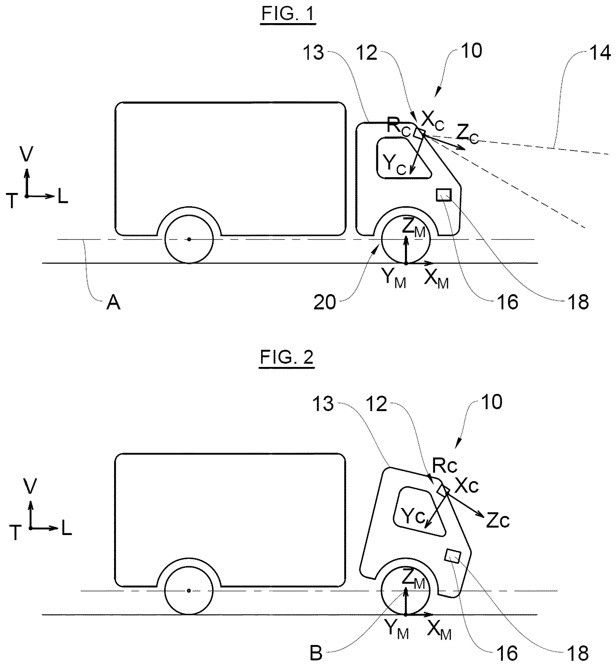

On a représenté à la figure 1 un véhicule automobile 10 du type camion qui embarque un capteur d'acquisition d'images constitué par une caméra vidéo 12.

La caméra vidéo 12 est montée sur le pare-brise avant d'une cabine 13 de conduite, par exemple au voisinage du rétroviseur central, de façon à scruter l'environnement immédiat du véhicule automobile 10, comme illustré sur la figure 1 par le champ de vision 14 de la caméra vidéo 12.

La cabine 13 de conduite est montée mobile en roulis et en tangage par rapport au châssis du véhicule, au moyen d'un dispositif de suspension par exemple.

Les images numériques acquises par la caméra vidéo 12 sont transmises à une unité de traitement 16 appartenant à un système d'aide à la conduite, par exemple pour permettre au système d'aide à la conduite de détecter des objets et prendre une décision d'intervention active dans la conduite du véhicule automobile 10.

Aussi, le système d'aide à la conduite comporte un dispositif d'estimation dynamique 18 du tangage et du roulis du véhicule automobile 10 qui est adapté pour mettre en oeuvre un procédé d'estimation dynamique du tangage et du roulis du véhicule automobile 10 selon l'invention.

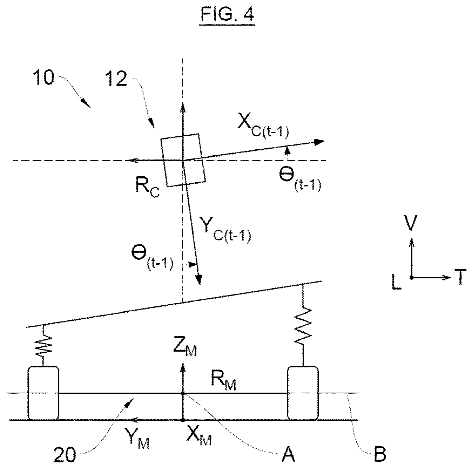

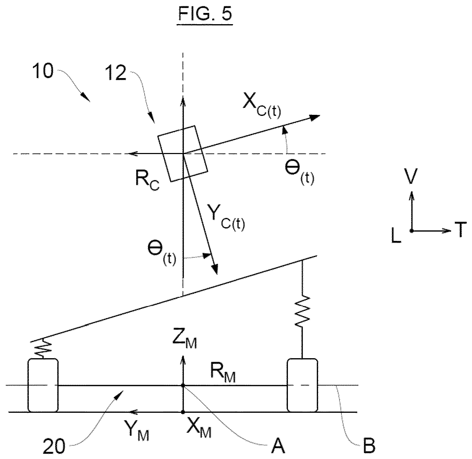

On entend par roulis un angle d'inclinaison extrinsèque absolu $\theta(t)$ de la caméra vidéo 12 estimé dynamiquement, qui correspond à un angle d'inclinaison de la caméra vidéo 12 autour d'un axe A longitudinal globalement parallèle à la trajectoire longitudinale du véhicule automobile 10, comme on peut le voir aux figures 4 et 5.

Autrement dit, le roulis correspond à une inclinaison de la structure du véhicule automobile 10, et donc de la caméra vidéo 12, vers la gauche ou vers la droite en référence à la trajectoire de déplacement du véhicule automobile 10 en marche avant.

Aussi, on entend par tangage un angle d'inclinaison extrinsèque absolu $\theta(t)$ de la caméra vidéo 12 estimé dynamiquement qui correspond à un angle d'inclinaison de la caméra vidéo 12 autour d'un axe B transversal globalement perpendiculaire à la trajectoire longitudinale du véhicule automobile 10, comme on peut le voir à la figure 2.

Dans la suite de la description, l'angle d'inclinaison extrinsèque absolu $\theta(t)$ désignera mutatis mutandis l'angle de tangage ou l'angle de roulis de la caméra vidéo 12, notamment dans les formules mathématiques décrites ci-dessous.

On a représenté aux figures 1 à 5 un premier repère tridimensionnel $R_C$ $\{x_C, y_C, z_C\}$ qui est appelé repère caméra et qui est lié à la caméra vidéo 12, et un second repère tridimensionnel $R_M$ $\{x_M, y_M, z_M\}$ qui est appelé repère monde.

Le repère monde $R_M$ est lié au train roulant avant 20 du véhicule automobile 10 et est projeté sur la route.

De manière générale, les angles de tangage et de roulis sont des angles de rotation entre des axes du repère caméra $R_C$ et des axes du repère monde $R_M$.

On notera que l'orientation du repère monde $R_M$ est liée à la pente sur laquelle évolue le véhicule automobile 10. Par exemple, si le véhicule évolue sur une pente suffisamment longue, le repère monde est orienté suivant cette pente.

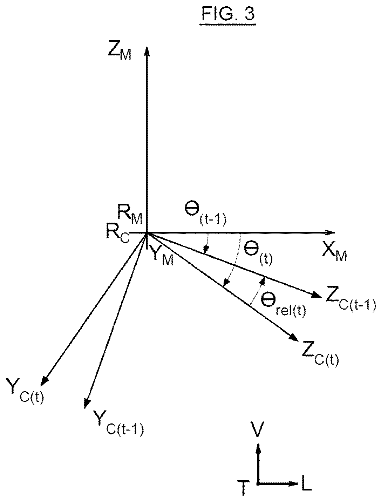

Comme il apparaît plus clairement sur la figure 3, l'angle d'inclinaison extrinsèque absolu $\theta(t)$ représente un angle de tangage estimé à un instant t défini comme étant l'angle formé, à cet instant t, entre l'axe $z_C$ du repère de la caméra $R_C$ et l'axe $x_M$ du repère monde RM.

De même, en référence aux figures 4 à 6, l'angle d'inclinaison extrinsèque absolu $\theta(t)$ représente un angle de roulis estimé à un instant t défini comme étant l'angle formé, à cet instant t, entre l'axe $x_C$ du repère de la caméra $R_C$ et l'axe $y_M$ du repère monde $R_M$.

L'homme du métier appréciera que le tangage et le roulis représentés ici et dont les estimations font l'objet de l'invention sont le tangage et le roulis extrinsèques, au sens défini plus haut à propos plus généralement des paramètres extrinsèques de la caméra vidéo 12.

La variation éventuelle des paramètres intrinsèques, tels que définis plus haut, ne fait pas l'objet de l'estimation décrite ci-après. En effet, ces paramètres sont calibrés et, en général, pas soumis à des variations significatives dans des échelles de temps courtes. Ils peuvent donc être considérés comme stables aux regards des phénomènes dynamiques que le procédé d'estimation selon l'invention vise à suivre, qui sont liés à des événements de conduite comme le passage sur un dos d'âne ou sur un cassis c'est-à-dire sur une brusque dénivellation convexe ou concave, respectivement, dans le cas du tangage, ou encore d'un coussin berlinois, d'un virage rapide ou d'un nid de poule dans le cas du roulis, sur la chaussée d'une route.

Le procédé d'estimation dynamique du tangage et du roulis du véhicule automobile 10 selon l'invention comprend une première étape de calcul d'un angle d'inclinaison extrinsèque de la caméra vidéo 12 estimé par intégration du mouvement relatif $\theta_{\text{int}}(t)$ inter-image de la caméra 12 à un instant t courant, par l'équation suivante :

$$\theta_{\text{int}}(t) = \theta(t-1) - \theta_{rel}(t)$$

avec $\theta(t-1)$ l'angle d'inclinaison extrinsèque absolu de la caméra vidéo 12 à un instant précédent t-1, et $\theta_{rel}(t)$ l'angle d'inclinaison relatif de la caméra vidéo 12 à l'instant t courant qui exprime l'angle d'inclinaison de la caméra vidéo 12 entre l'instant précédent t-1 et l'instant t courant.

Par instant précédent, on entend par exemple l'instant de la précédente acquisition d'image par la caméra vidéo 12 dans une séquence d'acquisitions successives, ou l'instant de l'acquisition d'une image séparée d'un nombre donné d'acquisitions, nombre par exemple choisi à l'avance, dans ladite séquence, ou encore l'instant d'acquisition d'une image antérieure acquise un certain temps donné avant l'instant t.

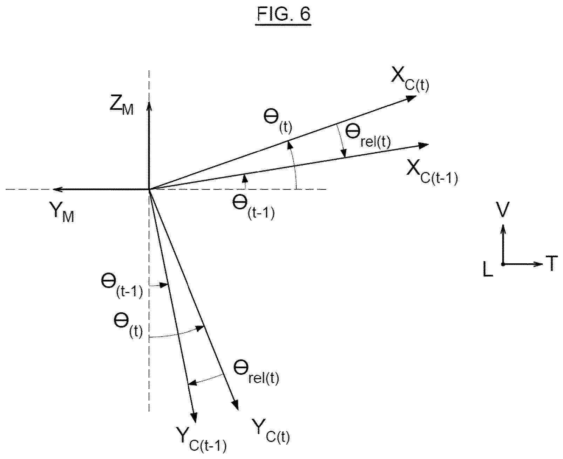

Des exemples d'évolution de l'orientation de la caméra vidéo 12 sont donnés aux figures 3 et 6.

Le procédé selon l'invention comprend une seconde étape d'estimation d'un angle d'inclinaison extrinsèque absolu de la caméra vidéo 12, qui est réalisée à la suite de la première étape, par l'équation suivante :

$$\theta(t) = \theta_{\text{int}}(t) + DAC(t) * \left( \theta_{calib}(t) - \theta_{\text{int}}(t) \right)$$

avec $\theta(t)$ l'angle d'inclinaison extrinsèque absolu de la caméra vidéo 12, à l'instant t courant, $\theta_{\text{int}}(t)$ l'angle d'inclinaison extrinsèque de la caméra vidéo 12 estimé par intégration du mouvement relatif de la caméra inter-image au cours de la première étape de calcul précédente, à l'instant t courant, $DAC(t)$ un coefficient d'anti-divergence compris entre zéro et un, à l'instant t courant, et $\theta_{calib}(t)$ l'angle d'inclinaison extrinsèque de calibrage à l'instant t courant, qui est connu à chaque instant et qui correspond à la valeur nominale de l'angle d'inclinaison de la caméra vidéo 12 en l'absence de dynamique du véhicule automobile 10.

La valeur de l'angle d'inclinaison extrinsèque de calibrage $\theta_{calib}(t)$ en fonction du temps peut être obtenue suivant toute méthode de calibration extrinsèque connue, telles que, par exemple, la méthode SLAM ou le suivi des lignes blanches.

L'angle d'inclinaison extrinsèque de calibrage $\theta_{calib}(t)$ est un angle de référence, il est également possible d'utiliser l'angle de la caméra vidéo 12 décidé pendant la conception du véhicule, ou l'angle estimé lors du calibrage en fin de chaîne de production du véhicule.

Le coefficient d'anti-divergence $DAC(t)$ évite, comme son nom l'indique, la divergence de l'estimation de l'angle d'inclinaison $\theta(t)$.

En effet, l'angle d'inclinaison $\theta(t)$ estimé peut diverger de la vraie valeur par accumulation dans le temps des erreurs d'estimation de l'angle d'inclinaison estimé par intégration du mouvement relatif de la caméra 12 $\theta_{\text{int}}(t)$.

En l'absence du coefficient d'anti-divergence $DAC(t)$, les erreurs potentielles d'estimation de l'angle d'inclinaison relatif $\theta_{rel}(t)$ de la caméra vidéo 12 seraient sommées au fil du temps, ce qui pourrait engendrer des erreurs d'estimation de l'angle d'inclinaison $\theta(t)$ estimé et, dans les cas extrêmes, des divergences importantes entre l'angle d'inclinaison $\theta(t)$ estimé et l'angle d'inclinaison réel.

Selon la valeur qui est attribuée au coefficient d'anti-divergence $DAC(t)$, le calcul de l'angle d'inclinaison $\theta(t)$ est plus ou moins restreint par l'angle d'inclinaison extrinsèque de calibrage $\theta_{calib}(t)$.

Afin que l'estimation de l'angle d'inclinaison $\theta(t)$ de la caméra vidéo 12 puisse prendre en compte la multitude des scenarios de la route sans pour autant diverger, le coefficient d'anti-divergence $DAC(t)$ est calculé, au cours de la seconde étape d'estimation du procédé, par l'équation suivante :

$$DAC(t) = min\left( DAC_{rel}(t), DAC_{\vec{a}}(t) \right)$$

avec $DAC_{rel}(t)$ un coefficient d'anti-divergence relatif qui dépend du mouvement de la caméra vidéo 12 et qui est obtenu par l'équation suivante :

$$DAC_{rel}(t) = DAC_{maxrel} * \left( 1 - min\left( \int_{t-Nrel}^{t} \frac{|\theta_{rel}(x)|}{\theta AMR} dx, 1 \right) \right)$$

avec $DAC_{maxrel}$ une valeur maximale prédéterminée du coefficient d'anti-divergence $DAC_{rel}(t)$, $Nrel$ un nombre prédéterminé correspondant à la valeur choisie du nombre d'instants précédents utilisés pour la détermination du coefficient d'anti-divergence relatif $DAC_{rel}(t)$, $\theta_{rel}(t)$ l'angle d'inclinaison relatif de la caméra vidéo 12 à l'instant t courant, $\theta AMR$ une valeur maximale empirique prédéterminée de l'angle d'inclinaison relatif de la caméra vidéo 12 à l'instant t courant $\theta_{rel}(t)$.

Le coefficient d'anti-divergence d'accélération $DAC_{\vec{a}}(t)$ est un coefficient d'anti-divergence qui dépend de l'accélération subie par la caméra vidéo 12 et qui est obtenu par l'équation suivante :

$$DAC_{\vec{a}}(t) = DAC_{max\vec{a}} * \left( 1 - min\left( \int_{t-Na}^{t} \frac{|\vec{a}(x)|}{\vec{a}AMR} dx, 1 \right) \right)$$

avec $DAC_{max\vec{a}}$ une valeur maximale prédéterminée du coefficient d'anti-divergence d'accélération $DAC_{\vec{a}}(t)$, $Na$ le nombre prédéterminé correspondant à la valeur choisie du nombre d'instants précédents utilisés pour la détermination du coefficient d'anti-divergence d'accélération $DAC_{\vec{a}}(t)$, $\vec{a}(t)$ l'accélération de la caméra vidéo 12 à l'instant t, et $\vec{a}AMR$ une valeur maximale empirique prédéterminée de l'accélération $\vec{a}(t)$ de la caméra vidéo 12.

On notera que les paramètres $DAC_{maxrel}$, $Nrel$, $\theta AMR$, $DAC_{max\vec{a}}$, $Na$ et $\vec{a}AMR$ peuvent être modifiés pour ajuster le comportement de l'algorithme qui permet d'estimer l'angle d'inclinaison extrinsèque absolu de la caméra vidéo 12 $\theta(t)$.

Avantageusement, le coefficient d'anti-divergence $DAC(t)$ dépend à la fois du mouvement de la caméra vidéo 12 entre l'instant courant t et un instant précédent avec le coefficient d'anti-divergence relatif $DAC_{rel}(t)$, et aussi de l'accélération subie par la caméra vidéo 12 au cours du déplacement du véhicule automobile 10 avec le coefficient d'anti-divergence d'accélération $DAC_{\vec{a}}(t)$.

En effet, lorsque le mouvement inter-image est élevé, lors du passage d'un nid de poule ou d'un coussin berlinois par exemple, le coefficient d'anti-divergence relatif $DAC_{rel}(t)$ tend vers zéro et l'angle d'inclinaison $\theta(t)$ de la caméra vidéo 12 estimé se rapproche de l'angle d'inclinaison extrinsèque de la caméra vidéo 12 estimé par intégration du mouvement relatif de la caméra 12 $\theta_{int}(t)$.

A l'inverse, lorsque le mouvement inter-image est faible, par exemple au cours d'un long freinage d'urgence ou du passage d'un rond-point, le coefficient d'anti-divergence relatif $DAC_{rel}(t)$ tend vers la valeur maximale prédéterminée $DAC_{maxrel}$ du coefficient d'anti-divergence d'accélération $DAC_{\vec{a}}(t)$ et l'estimation de l'angle d'inclinaison $\theta(t)$ se rapproche de sa valeur de référence qui est l'angle d'inclinaison extrinsèque de calibrage $\theta_{calib}(t)$ selon l'exemple décrit ici.

Le coefficient d'anti-divergence d'accélération $DAC_{\vec{a}}(t)$ ne dépend pas du mouvement de la caméra vidéo 12 mais de l'accélération $\vec{a}(t)$ subie par la caméra vidéo 12.

On notera que l'accélération $\vec{a}(t)$ de la caméra vidéo 12 est une accélération centrifuge transversale suivant une direction globalement perpendiculaire à la trajectoire du véhicule automobile 10 lorsque l'angle d'inclinaison extrinsèque absolu $\theta(t)$ de la caméra vidéo 12 désigne un angle de roulis.

L'accélération centrifuge $\vec{a}(t)$ subie par la caméra vidéo 12, et donc par la cabine du véhicule automobile 10, peut être estimée au moyen d'un ensemble de capteurs prévus à cet effet. Dans le cas de l'approximation des petits angles, l'accélération centrifuge $\vec{a}(t)$ est déterminée par l'équation suivante :

$$\vec{a}(t) = \omega(t) * v(t)$$

avec $\omega$ la vitesse angulaire de la cabine approximée à la vitesse angulaires du châssis du véhicule automobile 10, et $v$ la vitesse de la cabine approximée à la vitesse du châssis du véhicule automobile 10.

A l'inverse, l'accélération $\vec{a}(t)$ de la caméra vidéo 12 est une accélération longitudinale suivant la trajectoire longitudinale du véhicule automobile 10 lorsque l'angle d'inclinaison extrinsèque absolu $\theta(t)$ de la caméra vidéo 12 désigne un angle de tangage.

Faire dépendre le coefficient d'anti-divergence d'accélération $DAC_{\vec{a}}(t)$ de l'accélération $\vec{a}(t)$ permet de prendre en considération les scénarios dans lesquels la cabine, ou plus généralement le support de la caméra vidéo 12, est incliné un temps non négligeable par une force d'inertie.

Par exemple, si le véhicule automobile 10 entreprend un rond-point à faible allure, l'accélération $\vec{a}(t)$) reste faible et le coefficient d'anti-divergence d'accélération $DAC_{\vec{a}}(t)$ prend une valeur qui tend vers la valeur maximale prédéterminée $DAC_{max\vec{a}}$ du coefficient d'anti-divergence d'accélération, et l'angle d'inclinaison $\theta(t)$ se rapproche de la valeur de l'angle d'inclinaison extrinsèque de calibrage $\theta_{calib}(t)$.

En revanche, si le véhicule automobile 10 entreprend un rond-point avec dynamisme, ou si le véhicule automobile 10 entreprend un freinage d'urgence, l'accélération $\vec{a}(t)$ est élevée et le coefficient d'anti-divergence d'accélération $DAC_{\vec{a}}(t)$ prend une valeur qui tend vers zéro, et l'angle d'inclinaison $\theta(t)$ ne subira pas de filtrage qui le rapproche de la valeur de l'angle d'inclinaison extrinsèque de calibrage $\theta_{calib}(t)$.

Ainsi, le procédé selon l'invention permet d'estimer l'angle d'inclinaison extrinsèque absolu $\theta(t)$ de la caméra vidéo 12, qu'il s'agisse d'un angle de roulis ou d'un angle de tangage, de façon stable dans les phases de faible accélération et de façon réactive dans les phases de forte accélération ou décélération comme le passage d'un dos d'âne, d'un rond-point ou d'une courte portion de route inclinée.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Par exemple, une combinaison différente du coefficient d'anti-divergence d'accélération $DAC_{\vec{a}}(t)$ et du coefficient d'anti-divergence relatif $DAC_{rel}(t)$ peut être envisagée.

De même, à titre non limitatif, le coefficient d'anti-divergence relatif $DAC_{rel}(t)$, ou le coefficient d'anti-divergence $DAC(t)$, peuvent être déterminés à une valeur constante comprise entre zéro et un.

## Revendications

1. Procédé mis en oeuvre par ordinateur d'estimation dynamique du tangage et du roulis d'un véhicule automobile (10) au moyen d'au moins un capteur (12) d'acquisition d'images qui est embarqué sur ledit véhicule automobile (10), procédé qui comprend au moins :

   - une première étape de calcul d'au moins un angle d'inclinaison extrinsèque du capteur (12) estimé par intégration du mouvement relatif inter-images du capteur (12) $\theta_{\text{int}}(t)$ à un instant t courant, par l'équation suivante :

$$\theta_{\text{int}}(t) = \theta(t-1) - \theta_{rel}(t)$$

   avec :

   i. $\theta(t-1)$ l'angle d'inclinaison extrinsèque absolu du capteur (12) à un instant précédent t-1,
   ii. $\theta_{rel}(t)$ l'angle d'inclinaison relatif du capteur (12) à l'instant t courant qui exprime l'angle d'inclinaison du capteur (12) entre ledit instant précédent t-1 et l'instant t courant,

   - une seconde étape d'estimation d'au moins un angle d'inclinaison extrinsèque absolu dudit capteur (12), par l'équation suivante :

$$\theta(t) = \theta_{\text{int}}(t) + DAC(t) * \big(\theta_{calib}(t) - \theta_{\text{int}}(t)\big)$$

   avec :

   i. $\theta(t)$ l'angle d'inclinaison extrinsèque absolu du capteur (12), à l'instant t courant,
   ii. $\theta_{\text{int}}(t)$ l'angle d'inclinaison extrinsèque du capteur (12) estimé par intégration du mouvement relatif du capteur (12) au cours de la première étape de calcul précédente, à l'instant t courant,
   iii. *DAC(t)* un coefficient d'anti-divergence compris entre zéro et un, à l'instant t courant,
   iv. $\theta_{calib}(t)$ l'angle d'inclinaison extrinsèque de calibrage à l'instant t courant, qui est connu à chaque instant et qui correspond à la valeur nominale de l'angle d'inclinaison du capteur (12) en l'absence de dynamique du véhicule automobile (10), où le coefficient d'anti-divergence *DAC(t)* dépend en partie de l'accélération subie par le capteur (12) d'acquisition d'images au cours du déplacement du véhicule automobile (10).

2. Procédé selon la revendication 1, **caractérisé en ce que** le coefficient d'anti-divergence *DAC(t)* dépend en partie du mouvement du capteur (12) entre l'instant courant t et un instant précédent.

3. Procédé selon l'une quelconque des revendications précédentes, **caractérisé en ce que** la seconde étape d'estimation comprend le calcul du coefficient d'anti-divergence *DAC(t)* par l'équation suivante :

$$DAC(t) = min\big(DAC_{rel}(t), DAC_{\vec{a}}(t)\big)$$

   avec :

   - $DAC_{rel}(t)$ un coefficient d'anti-divergence relatif qui dépend du mouvement du capteur (12) et qui est obtenu par l'équation suivante :

$$DAC_{rel}(t) = DAC_{maxrel} * \left(1 - min\left(\int_{t-Nrel}^{t} \frac{|\theta_{rel}(x)|}{\theta AMR} dx, 1\right)\right)$$

avec

$DAC_{maxrel}$ une valeur maximale prédéterminée du coefficient d'anti-divergence relatif $DAC_{rel}(t)$, *Nrel* un nombre prédéterminé correspondant à la valeur choisie du nombre d'instants précédents utilisés pour la détermination du coefficient d'anti-divergence relatif $DAC_{rel}(t)$, $\theta_{rel}(t)$ l'angle d'inclinaison relatif du capteur (12) à l'instant t courant, $\theta AMR$ une valeur maximale empirique prédéterminée de l'angle d'inclinaison relatif du capteur (12) à l'instant t courant $\theta_{rel}(t)$,
$DAC_{\vec{a}}(t)$ un coefficient d'anti-divergence d'accélération qui dépend de l'accélération subie par le capteur (12), et qui est obtenu par l'équation suivante :

$$DAC_{\vec{a}}(t) = DAC_{max\vec{a}} * \left(1 - min\left(\int_{t-Na}^{t} \frac{|\vec{a}(x)|}{\vec{a}AMR} dx, 1\right)\right)$$

avec $DAC_{max\vec{a}}$ une valeur maximale prédéterminée du coefficient d'anti-divergence d'accélération $DAC_{\vec{a}}(t)$, *Na* le nombre prédéterminé correspondant à la valeur choisie du nombre d'instants précédents utilisés pour la détermination du coefficient d'anti-divergence d'accélération $DAC_{\vec{a}}(t)$, $\vec{a}(t)$ l'accélération du capteur (12) d'acquisition d'images à l'instant t, $\vec{a}AMR$ une valeur maximale empirique prédéterminée de l'accélération $\vec{a}$ (*t*) du capteur (12) d'acquisition d'images.

4. Procédé selon l'une quelconque des revendications précédentes, **caractérisé en ce que** l'angle d'inclinaison extrinsèque absolu $\theta(t)$ du capteur est un angle de roulis qui correspond à un mouvement d'oscillation angulaire du capteur (12) autour d'un axe (A) longitudinal globalement parallèle à la trajectoire longitudinale du véhicule automobile (10).

5. Procédé selon les revendications 3 et 4, **caractérisé en ce que** l'accélération $\vec{a}(t)$ du capteur (12) d'acquisition d'images est une accélération centrifuge transversale suivant une direction globalement perpendiculaire à la trajectoire du véhicule automobile (10).

6. Procédé selon l'une quelconque des revendications 1 à 3, **caractérisé en ce que** l'angle d'inclinaison extrinsèque absolu $\theta(t)$ du capteur est un angle de tangage qui correspond à un mouvement d'oscillation angulaire du capteur (12) autour d'un axe (B) transversal globalement perpendiculaire à la trajectoire longitudinale du véhicule automobile (10).

7. Procédé selon les revendications 3 et 6, **caractérisé en ce que** l'accélération $\vec{a}(t)$ du capteur (12) d'acquisition d'images est une accélération longitudinale suivant la trajectoire longitudinale du véhicule automobile (10).

8. Procédé selon l'une quelconque des revendications précédentes, **caractérisé en ce que** le véhicule automobile (10) est équipé d'une cabine (13) de conduite qui est montée oscillante en roulis et en tangage par rapport au châssis dudit véhicule (10) et qui porte le capteur (12) d'acquisition d'images.

9. Dispositif d'estimation dynamique (18) du tangage et du roulis d'un véhicule automobile (10) au moyen d'au moins un capteur (12) d'acquisition d'images qui est embarqué sur ledit véhicule, prévu pour mettre en oeuvre le procédé selon l'une quelconque des revendications précédentes, le dispositif comportant au moins un capteur (12) d'acquisition d'images qui est monté sur ledit véhicule (10) et une unité de traitement (16) pour déterminer l'angle d'inclinaison extrinsèque absolu $\theta(t)$ du capteur (12).

**Patentansprüche**

1. Computergestütztes Verfahren zur dynamischen Schätzung der Nick- und Rollbewegung eines Kraftfahrzeugs (10) mittels mindestens eines Bilderfassungssensors (12), der an dem Kraftfahrzeug (10) angebracht ist, wobei das Verfahren mindestens Folgendes umfasst:

- ein erster Schritt zur Berechnung von mindestens einem extrinsischen Neigungswinkel des Sensors (12), der durch Integration der relativen Bewegung zwischen aufeinanderfolgenden Bildern des Sensors (12), $\theta_{int}(t)$, zu

einem aktuellen Zeitpunkt t, geschätzt wird, gemäß folgender Gleichung:

$$\theta_{\text{int}}(t) = \theta(t-1) - \theta_{rel}(t)$$

wobei:

    i. $\theta(t-1)$ der absolute extrinsische Neigungswinkel des Sensors (12) zu einem vorhergehenden Zeitpunkt t-1 ist,

    ii. $\theta_{rel}(t)$ der relative Neigungswinkel des Sensors (12) zum aktuellen Zeitpunkt t ist, der den Neigungswinkel des Sensors (12) zwischen dem genannten vorhergehenden Zeitpunkt t-1 und dem aktuellen Zeitpunkt t angibt,

- ein zweiter Schritt zur Schätzung von mindestens einem absoluten extrinsischen Neigungswinkel des genannten Sensors (12) gemäß folgender Gleichung:

$$\theta(t) = \theta_{\text{int}}(t) + DAC(t) \; * \; (\theta_{calib}(t) - \theta_{\text{int}}(t)),$$

wobei:

    i. $\theta(t)$ der absolute extrinsische Neigungswinkel des Sensors (12) zum aktuellen Zeitpunkt t ist,

    ii. $\theta_{\text{int}}(t)$ der extrinsische Neigungswinkel des Sensors (12) ist, der durch Integration der relativen Bewegung des Sensors (12) im Rahmen des zuvor durchgeführten ersten Berechnungsschritts, zum aktuellen Zeitpunkt t, geschätzt wird,

    iii. $DAC(t)$ ein Antidivergenz-Koeffizient ist, der zwischen null und eins liegt, zum aktuellen Zeitpunkt t,

    iv. $\theta_{calib}(t)$ der extrinsische Kalibrierungsneigungswinkel zum aktuellen Zeitpunkt t ist, der zu jedem Zeitpunkt bekannt ist und dem Nennwert des Neigungswinkels des Sensors (12) bei Abwesenheit der Dynamik des Kraftfahrzeugs (10) entspricht,

wobei der Antidivergenz-Koeffizient $DAC(t)$ teilweise von der Beschleunigung abhängt, die der Bilderfassungssensor (12) während der Bewegung des Kraftfahrzeugs (10) erfährt.

2. Verfahren nach Anspruch 1, **dadurch gekennzeichnet, dass** der Antidivergenzkoeffizient $DAC(t)$ teilweise von der Bewegung des Sensors (12) zwischen dem aktuellen Zeitpunkt t und einem vorherigen Zeitpunkt abhängt.

3. Verfahren nach einem der vorhergehenden Ansprüche, **dadurch gekennzeichnet, dass** der zweite Schätzungsschritt die Berechnung des Antidivergenz-Koeffizienten $DAC(t)$ gemäß folgender Gleichung umfasst:

$$DAC(t) = \min(DAC_{rel}(t), DAC_{\vec{a}}(t))$$

wobei:

- $DAC_{rel}(t)$ ein relativer Antidivergenz-Koeffizient ist, der von der Bewegung des Sensors (12) abhängt und durch die folgende Gleichung bestimmt wird:

$$DAC_{rel}(t) = DAC_{maxrel} \; * \; \left(1 - \min\left(\int_{t-Nrel}^{t} - \frac{|\theta_{rel}(x)|}{\theta AMR} dx, 1\right)\right)$$

wobei

$DAC_{maxrel}$ ein vordefinierter Maximalwert des relativen Antidivergenz-Koeffizienten $DAC_{rel}(t)$ ist, $Nrel$ eine vordefinierte Zahl ist, die dem gewählten Wert der Anzahl vorhergehender Zeitpunkte entspricht, die zur Bestimmung des relativen Antidivergenz-Koeffizienten $DAC_{rel}(t)$ verwendet werden, $\theta_{rel}(t)$ der relative Neigungswinkel des Sensors (12) zum aktuellen Zeitpunkt t ist, $\theta AMR$ ein vordefinierter empirischer Maximalwert des relativen Neigungswinkels des Sensors (12) zum aktuellen Zeitpunkt t $\theta_{rel}(t)$ *ist,*
$DAC_{\vec{a}}(t)$ ein Beschleunigungs-Antidivergenz-Koeffizient ist, der von der vom Sensor (12) erfahrenen Be-

EP 4 430 568 B1

schleunigung abhängt und durch die folgende Gleichung bestimmt wird:

$$DAC_{\vec{a}}(t) = DAC_{max\vec{a}} * \left(1 - min\left(\int_{t-Na}^{t} - \frac{|\vec{a}(x)|}{\vec{a}AMR} dx, 1\right)\right)$$

wobei $DAC_{max\vec{a}}$ ein vordefinierter Maximalwert des Beschleunigungs-Antidivergenz-Koeffizienten DA $C_{\vec{a}}(t)$ ist, *Na* die vordefinierte Zahl ist, die dem gewählten Wert der Anzahl vorhergehender Zeitpunkte entspricht, die zur Bestimmung des Beschleunigungs-Antidivergenz-Koeffizienten verwendet werden, $DAC_{\vec{a}}(t), \vec{a}(t)$ die Beschleunigung des Bilderfassungssensors (12) zum Zeitpunkt t ist, $\vec{a}AMR$ ein vordefinierter empirischer Maximalwert der Beschleunigung $\vec{a}(t)$ des Bilderfassungssensors (12) ist.

4. Verfahren nach einem der vorhergehenden Ansprüche, **dadurch gekennzeichnet, dass** der absolute extrinsische Neigungswinkel $\theta(t)$ des Sensors ein Rollwinkel ist, der einer Drehschwingung des Sensors (12) um eine Längsachse (A) entspricht, die im Wesentlichen parallel zur Längsrichtung des Kraftfahrzeugs (10) verläuft.

5. Verfahren nach den Ansprüchen 3 und 4, **dadurch gekennzeichnet, dass** die Beschleunigung $\vec{a}(t)$ des Bilderfassungssensors (12) eine Quer-Zentrifugalbeschleunigung in einer im Wesentlichen senkrecht zur Fahrtrichtung des Kraftfahrzeugs (10) verlaufenden Richtung ist.

6. Verfahren nach einem der Ansprüche 1 bis 3, **dadurch gekennzeichnet, dass** der absolute extrinsische Neigungswinkel $\theta(t)$ des Sensors ein Nickwinkel ist, der einer Drehschwingung des Sensors (12) um eine Querachse (B) entspricht, die im Wesentlichen senkrecht zur Längsrichtung des Kraftfahrzeugs (10) verläuft.

7. Verfahren nach den Ansprüchen 3 und 6, **dadurch gekennzeichnet, dass** die Beschleunigung $\vec{a}(t)$ des Bilderfassungssensors (12) eine Längsbeschleunigung entlang der Längsrichtung des Kraftfahrzeugs (10) ist.

8. Verfahren nach einem der vorhergehenden Ansprüche, **dadurch gekennzeichnet, dass** das Kraftfahrzeug (10) mit einem Fahrerhaus (13) ausgestattet ist, das in Roll- und Nickbewegung gegenüber dem Fahrgestell des Fahrzeugs (10) gelagert ist und den Bilderfassungssensor (12) trägt.

9. Vorrichtung zur dynamischen Schätzung (18) von Nick- und Rollbewegungen eines Kraftfahrzeugs (10) mittels mindestens eines auf dem Fahrzeug montierten Bilderfassungssensors (12), vorgesehen zur Durchführung des Verfahrens nach einem der vorhergehenden Ansprüche, wobei die Vorrichtung mindestens einen auf dem Fahrzeug (10) montierten Bilderfassungssensor (12) und eine Verarbeitungseinheit (16) zum Bestimmen des absoluten extrinsischen Neigungswinkels $\theta(t)$ des Sensors (12) aufweist.

**Claims**

1. A computer-implemented method of dynamically estimating the pitch and roll of a motor vehicle (10) by means of at least one image-acquiring sensor (12) that is located on board said motor vehicle (10), which method comprises at least:

   - a first step of computing at least an extrinsic tilt angle of the sensor (12) estimated by integrating the relative inter-image movement of the sensor (12) $\theta_{int}(t)$ at a current time t, using the following equation:

   $$\theta_{int}(t) = \theta(t-1) - \theta_{rel}(t)$$

   with:

   i. $\theta(t-1)$ the absolute extrinsic tilt angle of the sensor (12) at a previous time t-1,
   ii. $\theta_{rel}(t)$ the relative tilt angle of the sensor (12) at the current time t, which expresses the tilt angle of the sensor (12) between said previous time t-1 and the current time t,

   - a second step of estimating at least an absolute extrinsic tilt angle of said sensor (12), using the following equation:

$$\theta(t) = \theta_{int}(t) + DAC(t) * (\theta_{calib}(t) - \theta_{int}(t))$$

with:

    i. $\theta(t)$ the absolute extrinsic tilt angle of the sensor (12), at the current time t,

    ii. $\theta_{int}(t)$ the extrinsic tilt angle of the sensor (12) estimated by integrating the relative movement of the sensor (12) in the course of the preceding first computing step, at the current time t,

    iii. $DAC(t)$ a drift-avoidance coefficient, comprised between zero and one, at the current time t,

    iv. $\theta_{calib}(t)$ the calibration extrinsic tilt angle at the current time t, which is known at all times and which corresponds to the nominal value of the tilt angle of the sensor (12) when the motor vehicle (10) is not moving,

where the drift-avoidance coefficient $DAC(t)$ depends partly on the acceleration experienced by the image-acquiring sensor (12) in the course of the movement of the motor vehicle (10).

2. The method as claimed in claim 1, **characterized in that** the drift-avoidance coefficient $DAC(t)$ depends partly on the movement of the sensor (12) between the current time t and a previous time.

3. The method as claimed in either one of the preceding claims, **characterized in that** the second estimating step comprises computing the drift-avoidance coefficient $DAC(t)$ using the following equation:

$$DAC(t) = \min(DAC_{rel}(t), DAC_{\vec{a}}(t))$$

with:

- $DAC_{rel}(t)$ a relative drift-avoidance coefficient that depends on the movement of the sensor (12) and that is obtained using the following equation:

$$DAC_{rel}(t) = DAC_{maxrel} * \left(1 - \min\left(\int_{t-Nrel}^{t} \frac{|\theta_{rel}(x)|}{\theta AMR} dx, 1\right)\right)$$

with

$DAC_{maxrel}$ a predetermined maximum value of the relative drift-avoidance coefficient $DAC_{rel}(t)$, $Nrel$ a predetermined number corresponding to the selected value of the number of previous times used to determine the relative drift-avoidance coefficient $DAC_{rel}(t)$, $\theta_{rel}(t)$ the relative tilt angle of the sensor (12) at the current time t, and $\theta AMR$ a predetermined empirical maximum value of the relative tilt angle of the sensor (12) at the current time t $\theta_{rel}(t)$,

$DAC_{\vec{a}}(t)$ an acceleration drift-avoidance coefficient that depends on the acceleration experienced by the sensor (12), and that is obtained using the following equation:

$$DAC_{\vec{a}}(t) = DAC_{max\vec{a}} * \left(1 - \min\left(\int_{t-Na}^{t} \frac{|\vec{a}(x)|}{\vec{a}AMR} dx, 1\right)\right)$$

with $DAC_{max\vec{a}}$ a predetermined maximum value of the acceleration drift-avoidance coefficient $DA C_{\vec{a}}(t)$, $Na$ the predetermined number corresponding to the selected value of the number of previous times used to determine the acceleration drift-avoidance coefficient $DAC_{\vec{a}}(t)$, $\vec{a}(t)$ the acceleration of the image-acquiring sensor (12) at the time t, and $\vec{a}AMR$ a predetermined empirical maximum value of the acceleration $\vec{a}(t)$ of the image-acquiring sensor (12).

4. The method as claimed in any one of the preceding claims, **characterized in that** the absolute extrinsic tilt angle $\theta(t)$ of the sensor is a roll angle corresponding to an angular oscillatory movement of the sensor (12) about a longitudinal axis (A) that on the whole is parallel to the longitudinal path of the motor vehicle (10).

5. The method as claimed in claims 3 and 4, **characterized in that** the acceleration $\vec{a}(t)$ of the image-acquiring sensor (12) is a transverse centrifugal acceleration in a direction that on the whole is perpendicular to the path of the motor vehicle (10).

6. The method as claimed in any one of claims 1 to 3, **characterized in that** the absolute extrinsic tilt angle $\theta(t)$ of the sensor is a pitch angle corresponding to an angular oscillatory movement of the sensor (12) about a transverse axis (B) that on the whole is perpendicular to the longitudinal path of the motor vehicle (10).

7. The method as claimed in claims 3 and 6, **characterized in that** the acceleration $\vec{a}(t)$ of the image-acquiring sensor (12) is a longitudinal acceleration along the longitudinal path of the motor vehicle (10).

8. The method as claimed in any one of the preceding claims, **characterized in that** the motor vehicle (10) is equipped with a driver's cab (13) that is mounted so as to be able to oscillate rollwise and pitchwise with respect to the chassis of said vehicle (10) and that bears the image-acquiring sensor (12).

9. A device (18) for dynamically estimating the pitch and roll of a motor vehicle (10) by means of at least one image-acquiring sensor (12) that is located on board said vehicle, said device being intended to implement the method as claimed in any one of the preceding claims, the device including at least one image-acquiring sensor (12) that is mounted on said vehicle (10) and a processing unit (16) for determining the absolute extrinsic tilt angle $\theta(t)$ of the sensor (12).

FIG. 1

FIG. 2

FIG. 3

FIG. 4

## FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3579191 B1
- US 6292759 B1
- US 6678631 B2